# EUROPEAN PATENT APPLICATION

(11) **EP 3 730 805 A1**
(43) Date of publication of application: **28.10.2020**
(21) Application number: 19275058.6
(22) Date of filing: 24.04.2019
(51) Int. Cl.: F15B 15/14, F15B 19/00, G01M 3/04, G01M 3/26, G01L 7/16, G01L 9/00, G01M 3/18, G01M 3/28

(54) **LEAK DETECTION**

(71) Applicant: Claverham Limited, Bristol BS49 4NF (GB)
(72) Inventor: BREWER, Paul R., Bristol BS31 2NB (GB); RAVAL, Reg. R., North Somerset BS49 9QY (GB)
(74) Representative: Dehns

(57) **Abstract**

A pressure detection device (30) is mounted within an actuator housing (1) between a piston rod (2) and the housing (1), to receive fluid leaked past a seal, via a bore (15) in the housing. The pressure detection device (30) is configured to provide an output indicative of the pressure or flow of the leaked fluid in the bore (15). Thus, the leaked fluid diverted via the bore (15) operates the pressure detection device to provide an output indicative of leakage.

## Description

### TECHNICAL FIELD

The present disclosure is concerned with the detection of leaks in hydraulic systems such as actuators.

### BACKGROUND

Hydraulic systems find various applications such as for hydraulic actuators whereby hydraulic fluid controls the actuator to control movement of a connected component. Hydraulic actuators are used, e.g. in many aircraft applications to control moveable aircraft parts such as wing and tail flaps, doors, landing gear and other moveable parts.

Hydraulic systems generally include a rod or piston moveable within a housing or cylinder in response to actuation of pressure by injection of hydraulic fluid into a hydraulic chamber in the housing. A free end of the piston is connected to the component to be moved by the actuator. The flow or pressure of the hydraulic fluid is controlled in response to a control signal that determines the degree and direction of movement of the piston relative to the housing.

Generally, one or more seals is provided between the piston and the housing to prevent leakage of the hydraulic fluid from the housing. For example, in a typical hydraulic actuator, a first seal is provided between the piston and the housing to retain the hydraulic fluid in the chamber. A second seal can be provided outward of the first seal along the length of the piston to prevent leakage if fluid should pass the first seal, e.g. if the first seal is damaged. Some actuators also include a scraper outward of the seal(s) that prevents the ingress of dust or debris and thus prevents dust/debris damaging the seal(s).

Due to the harsh environments in which many hydraulic systems operate, or even just due to normal life expectancy limitations and wear and tear, damage can be caused to the seals and fluid can leak. This can be unsightly and can even be hazardous, particularly if this leakage flow drips onto some hot surfaces such as heat exchangers or hot gas exhaust manifolds. Some planned leakage can also be designed into some systems so as to lubricate the rod seals in operation and thus to prevent seal degradation by the seals running dry.

Conventionally, hydraulic units are removed and the seals replaced under a scheduled maintenance program at predetermined intervals. Such removal and replacement means down time for the system which can be costly and time consuming and is therefore undesirable. In some cases, this might even turn out to be unnecessary, if the seal is actually still functional - such removal is carried out without actually knowing the state of the seal. On the other hand, the seal might become damaged well before the planned removal and leakage can occur and cause damage.

In some hydraulic systems, leakage can be observed to determined when the hydraulic unit should be removed and the seal(s) replaced. In one example, a small diameter bore can be drilled through the housing between the first and second seals or at some other position outward of the first seal such that any fluid leaking past the seal with flow through the bore and out of the housing into a container which can be observed to identify leakage. The container may be e.g. a clear container which can be viewed by e.g. maintenance personnel. When a given level of fluid appears in the container, as viewed through the clear walls or a viewing window or the like, the personnel knows that the seal is permitting leakage and a decision can be made as to whether the seal needs to be replaced.

Such systems, though, require an external container, which could be easily damaged, and rely on observation my maintenance personnel. Such systems also do not provide an accurate indicate of the level of leakage or the general health of the system.

There is a drive, particularly in the aerospace industry, towards extending the mean time before overhaul (MTBO) and to replace systems and components 'On Condition' - i.e. as required.

There is a need to provide a reliable, small, light and simple leakage monitoring system that avoids the above problems and can also be used for prognostic health monitoring e.g. to predict the remaining useful life of the seals.

### SUMMARY

According to the disclosure, there is provided a hydraulic system comprising: a hydraulic actuator comprising an actuator housing and an actuator piston rod axially moveable within the actuator housing, the actuator further comprising a chamber in the housing to which pressurised fluid is provided to cause movement of the piston rod relative to the housing; the hydraulic actuator further comprising a bore through the housing; the hydraulic actuator further comprising a first seal between the piston rod and the actuator housing arranged to prevent leakage of pressurised fluid from the chamber, wherein the seal is positioned between the chamber and the bore along the axial direction of the housing, such that fluid passing the first seal from the chamber is directed through the bore; the hydraulic system further comprising a pressure detection device arranged to detect pressurised fluid exiting the bore and to provide an output indicative of the flow of the fluid exiting the bore.

According to another aspect, there is provided a method of detecting leakage in a hydraulic system, comprising: diverting leaked fluid through a bore to a pressure detection device comprising an indicator responsive to and indicative of the pressure of the leaked fluid

The bore may be mounted anywhere downstream of the actuator seal, and may be between two seals and/or between a seal and a scraper.

The pressure detection device can be any known sensor such as a mechanical, spring biased sensor or an electric sensor.

### BRIEF DESCRIPTION OF THE DRAWINGS

Preferred embodiments will now be described, by way of example only, with reference to the drawings.
Fig. 1 is a partial side schematic view of a conventional hydraulic actuator.
Fig. 2 is a schematic view of a typical actuator configuration into which the invention can be incorporated.
Fig. 3 shows a seal indicating seal damage.
Fig. 4 is a schematic view in cross-section of one example of an arrangement according to the invention.
Fig. 5 is a schematic view in cross-section of another example of an arrangement according to the invention.
Fig.6 is a graph showing the relationship between seal damage and seal flow.
Fig. 7 is a graph showing the relationship between seal damage and leak detector pressure using a system such as shown in Fig. 4.
Fig. 8 is a graph showing the relationship between seal damage and sensor force using a system such as shown in Fig. 4.

### DETAILED DESCRIPTION

Whilst the specific description relates to hydraulic actuators, the invention is applicable to other hydraulic systems with seals, where leakage is to be monitored. The invention is described in relation to a simple actuator by way of example only.

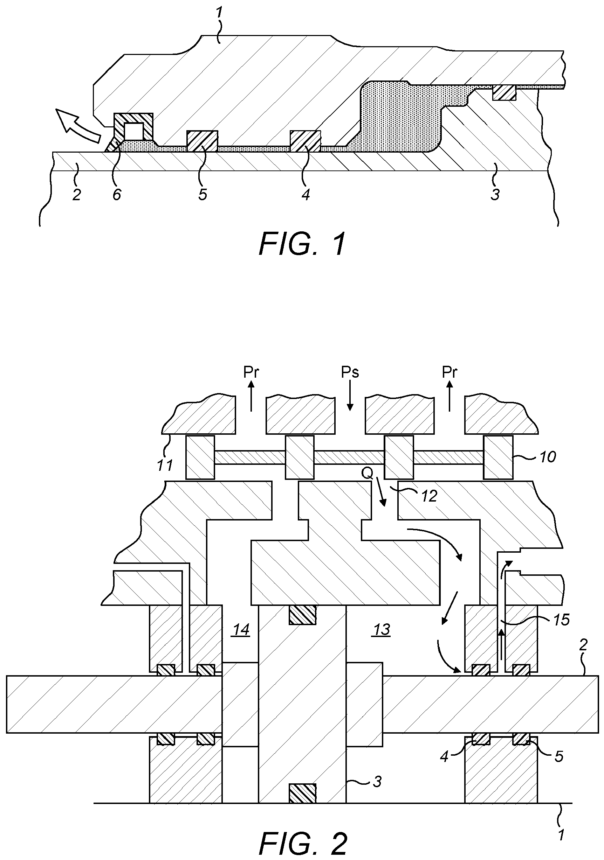

Referring first to Fig. 1, a conventional hydraulic actuator comprises a housing 1 within which a piston rod 2 is mounted for axial movement relative to the housing 1. Hydraulic fluid is provided to a chamber of the housing 1, defined between a head 3 of the piston within the housing 1, and the housing 1, as described further below, to force the piston rod 2 to move relative to the housing. Seals are provided between the piston rod and the housing 1 to prevent the hydraulic fluid flowing out of the chamber between the piston rod and the housing. In the example shown, the first seal is provided by a primary seal 4. A second 'back-up' seal 5 is provided outward of the primary seal to provide sealing in the event of leakage past the primary seal 1. In the example shown, a scraper 6 is also provided to prevent dust and debris damaging the seals.

Figure 2 shows an example of the hydraulic fluid flow in an actuator system.

Operation of the actuator is controlled, here, by a typical four-way valve. The valve spool 10 is moveably mounted in a housing 11 having ports for supply pressure Pₛ, return pressure Pᵣ and control flow (indicated here by Q). Responsive to a position control signal (not shown) the valve spool 10 moves relative to the housing 11 either blocking or freeing different combinations of the ports to define the hydraulic fluid flow path. This is conventional and well-known in the art and will not be described in detail. In summary, if the actuator is to be moved in a first direction (e.g. to the left in the drawing), the valve spool will be positioned such that pressurised fluid from a supply (not shown) flows through the supply port Pₛ through a control port 12 and into a chamber to the right of the piston head 3. As the pressure in the chamber increases (the seals 4,5 preventing the fluid leaving the chamber) the piston head (and thus the piston rod 2) is forced to move to the left. Fluid in a chamber 14 on the other side of the head is forced out of the actuator housing 1 and out through the return port Pᵣ. If it is required to move the piston in the opposite direction, the valve spool 10 is moved such that pressurised fluid flows into chamber 14 and out of chamber 13.

As mentioned above, seals (here primary seal 4 and secondary seal 5) prevent undesired leakage of fluid from the chamber 13. The same applies for chamber 14, not described here).

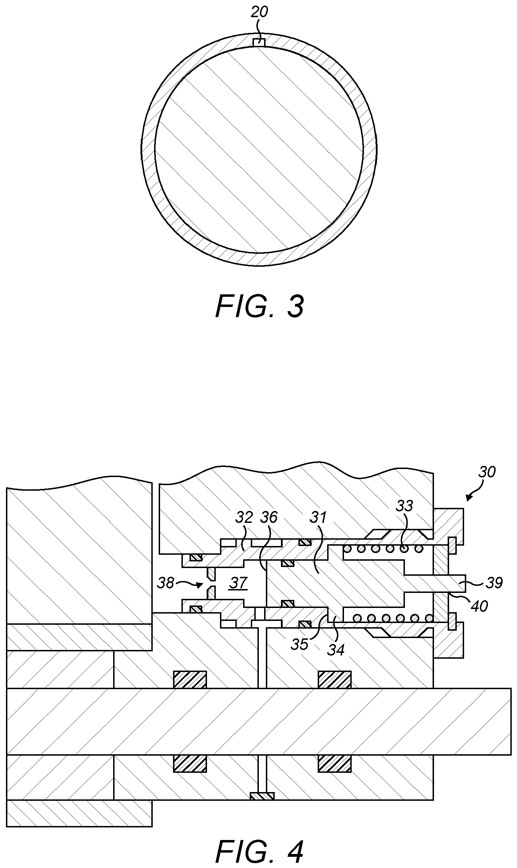

As mentioned above, the seals 4,5 can become damaged as can be seen from Fig. 3. A small cut or tear in the seal allows the fluid to leak past the seal.

If seal 4 is damaged, seal 5 should still prevent leakage. It is important, however, to know if fluid is leaking pas the primary seal 4 so that the seal can be replaced, since the back-up second seal 5 could also become damaged and should not, therefore, be relied on long-term.

In many systems, damage can only be detected on routine maintenance operations where the actuator is removed, requiring down-time, and risking that the seal becomes further damaged before the next scheduled removal.

In some systems, though, such as shown in Fig. 2, a small bore 15 is drilled in the housing 1 outward of the first seal. If leakage occurs past the primary seal 4, the leaked fluid will flow along this bore 15 and can be visually observed as discussed above. For example, the leaked fluid could be collected in an inspection container (not shown).

The present invention improved on such leakage management solutions as discussed further below.

The present solution makes use of the bore 15 described above. The bore can be positioned anywhere past the primary seal 4, e.g. between the primary and secondary seal, as shown, or between the secondary seal and a scraper.

A pressure detection device 30 is mounted within the actuator housing 1 between the piston rod 2 and the housing 1, to receive leaked fluid from the bore 15. The pressure detection device 30 is configured to provide an output indicative of the pressure or flow of the leaked fluid in the bore 15. The leaked fluid can then continue along the fluid path to a container or the like as with existing systems.

Thus, the leaked fluid diverted via the bore 15 operates the pressure detection device to provide an output indicative of leakage (which will also, as discussed further below, be indicative of the degree of seal damage).

For a duplex hydraulic actuator, the invention can also be applied to the centre and rear seal glands in an analogous manner. This will not be described in further detail.

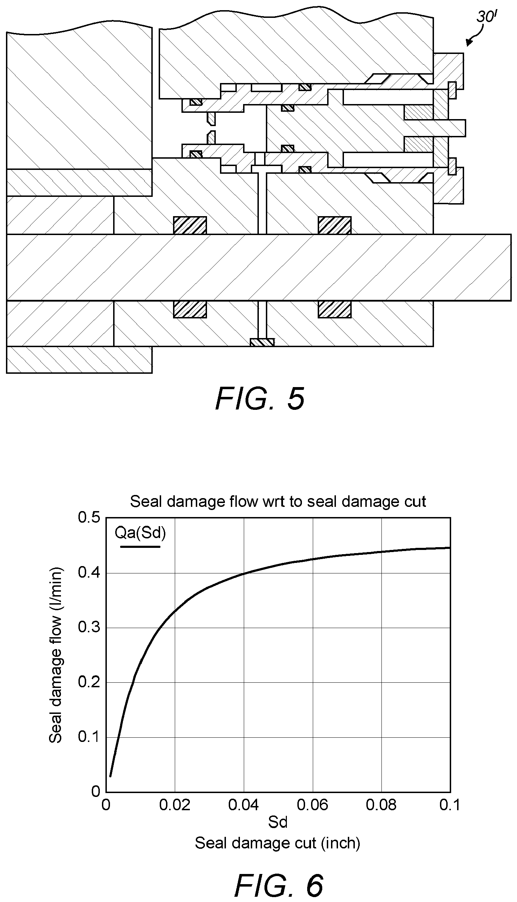

Any pressure detection device able to convert fluid pressure or flow to another physical parameter can be used. Figs 4 and 5 show two possible examples which will be described in more detail.

Fig. 4 shows an embodiment using a mechanical pressure detection device 30 mounted between the piston rod and the housing. The device can be mounted in a miniature capsule or cartridge (not shown in detail) and is mounted so as to receive fluid from the bore 15. This pressure detection device includes a piston 31 mounted in a housing 32 and held in a neutral position by means of a spring 33. The piston can be retained in this position by means of a detent 34 and shoulder 35 interaction. One end 36 of the piston is exposed to a chamber 37 into which the leaked fluid flows from the bore 15 via a restrictor or orifice 38. The pressure of the fluid in the chamber 37 will act against the pressure of the spring 33 and, at a certain predetermined threshold, will push the piston against the spring. A free end of the piston is then pushed relative to the housing and the position of that free end is indicative of the pressure in the chamber 37. In the example shown, the free end of the piston has a projection 39 that extends through an opening 40 in the housing, the degree of extension through the opening being indicative of the fluid pressure acting on the other end.

The orifice 38 is preferably a restrictor sized to increase the leakage oil pressure until a predetermined threshold leakage point at which the spring pressure is overcome and the device is operated.

A detent (not shown) can be provided to limit the extent to which the piston extends out of the housing. The free end/projection can be provided with indications e.g. visual markers such as coloured bands, numbers, bands of different thicknesses, etc. to allow a simple reading of the position and be able to easily correlate this with pressure.

Fig. 5 shows an alternative embodiment using an electronic sensor 30'. The principle of operation is the same as for the mechanical sensor described above but the pressure operates against the electronic sensor which produces an electrical signal rather than move a piston against the force of a spring. The device may also be arranged to provide optical, light, audible signals etc. indicative of the pressure acting on the device.

A wireless sensor could also be used that outputs information on a real-time basis.

Leakage is therefore managed and prevented from contaminating the actuator external surface and surrounding structure.

The device works on the findings that there is a relationship between seal damage (the size of the cut or tear in the seal) and other physical parameters of the systems - flow/pressure of the fluid in the bore 15 and hence in the chamber 37. On this basis, the condition of the actuator seals can be determined by monitoring the pressure detection device and then applying an appropriate algorithm associating detection device output with seal damage and which can detect abnormal increases in seal leakage. In this way, the detection device data can also be used to predict the remaining estimated operating time before the actuator has to be replaced because of unacceptable leakage.

The output information is also useful for prognostic health monitoring e.g. to predict the remaining useful life of the seals. A wireless connection of the output of the detection device, providing real-time data, will be advantageous here.

The algorithm can be formulated based on the analysis results shown in the graphs of Figs. 6 to 8. The results of the analysis are based on an example hydraulic fluid Mil-H-83282 at 65 deg. C. Of course other fluids and conditions can be used.

The following parameters were used in the analysis. Again, this is one example only.
Rod diameter d1 = 1.5 inch (3.81 cm)
Rod to gland diametral clearance h1 = 0.005 inch (0.127 mm)
Gland seal leak path length L1 = 0.16 inch (4.064 mm)
Fluid viscosity v = 8 cSt = 8 x 10⁻⁶ m²/**s**
Fluid density ρ = 850 kg/m³
Supply pressure Pₛ = 4000 psi = 28 MPa
Return pressure Pᵣ = 80 psi = 552 kPa
Control valve total port width w = 0.1 inch = 0.25 cm
Control valve opening stroke xv = 0.04 inch = 0.1 cm
Orifice diameter do = 0.01 inch = 0.025 cm
Sensor effective diameter Dsensor = 0.25 inch = 0.064 cm

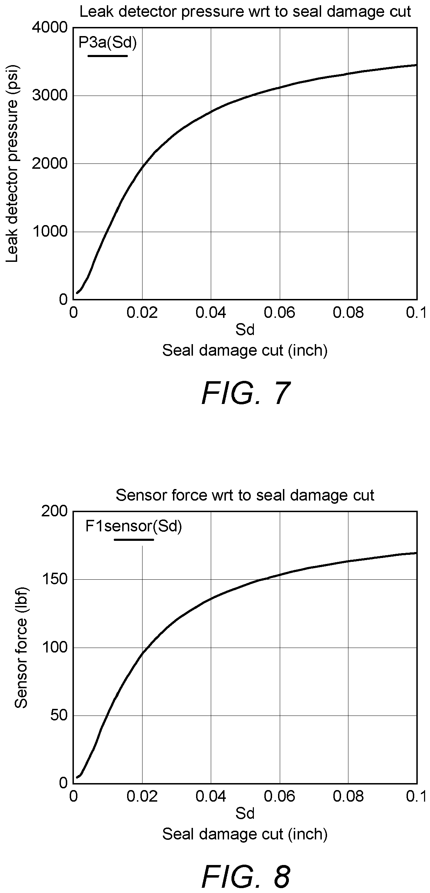

Fig. 6 shows the relationship between the size of the cut or tear in the seal and the flow of fluid past that seal. Generally, flow increases as cut size increases but increases more sharply for smaller cuts and more gradually for larger cuts. A similar relationship exists then as shown in Fig. 7 between the cut size and the pressure acting on the leak detection device. Correspondingly, the relationship between the sensor force and seal cut has a similar shape as shown in Fig. 8.

These results show that the leak detector pressure - i.e. the pressure acting on the detection device, and the sensor force, is sufficiently high to measure leakage induced due to seal failure. Even small failure will provide an identifiable response by the detection device.

According to the disclosure, there is provided a system and method for monitoring leakage in hydraulic systems. The system and method allow for more accurate monitoring of leakage to avoid systems being unnecessarily removed/replaced but also to ensure that they are replaced when necessary. This can increase MTBO but maintain reliability allowing 'On Condition' maintenance. Leakage is reliably monitored and managed to avoid external leakage and also allows prognostic health monitoring.

## Claims

1. A hydraulic system comprising:
a hydraulic actuator comprising an actuator housing (1) and an actuator piston rod (2) axially moveable within the actuator housing, the actuator further comprising a chamber in the housing to which pressurised fluid is provided to cause movement of the piston rod relative to the housing;
the hydraulic actuator further comprising a bore (15) through the housing;
the hydraulic actuator further comprising a first seal (4) between the piston rod and the actuator housing arranged to prevent leakage of pressurised fluid from the chamber, wherein the seal is positioned between the chamber and the bore (15) along the axial direction of the housing, such that fluid passing the first seal from the chamber is directed through the bore;
the hydraulic system further comprising a pressure detection device (30) arranged to detect pressurised fluid exiting the bore (15) and to provide an output indicative of the flow of the fluid exiting the bore.

2. The hydraulic system of claim 1, further comprising a second seal (5) axially spaced from the first seal (4), and wherein the bore (15) is located between the first seal and the second seal.

3. The hydraulic system of claim 1 or 2, further comprising a scraper (6) located between the piston rod and the housing at an axial position between the first seal (4) and an end of the piston rod remote from the chamber, and wherein the bore is located between the first seal and the scraper.

4. The hydraulic system of any preceding claim, wherein the pressure detection device (30) comprises a piston (31) mounted in a housing (32) arranged to move axially relative to the housing in response to the flow of the fluid exiting the bore, the extent of axial movement being indicative of the flow.

5. The hydraulic system of claim 4, further comprising a spring (33) arranged to bias the piston (31) in a neutral position and against which the fluid flow exerts force to cause axial movement of the piston.

6. The hydraulic system of claim 4, wherein the pressure detection device is an electronic sensor (30') whereby fluid pressure operates on the electronic sensor which produces an electrical signal.

7. The hydraulic system of any of claims 4 to 6, wherein movement of the piston provides a visual indication indicative of the fluid flow.

8. The hydraulic system of any preceding claim wherein the pressure detection device is provided in a capsule.

9. The hydraulic system of any preceding claim, whereby fluid exiting the bore (15) enters a chamber defined on one side by the pressure detection device and on the other side by a restrictor orifice configured to actuate the pressure detection device when fluid in the chamber exceeds a given pressure.

10. A method of detecting leakage in a hydraulic system, comprising: diverting leaked fluid through a bore to a pressure detection device comprising an indicator responsive to and indicative of the pressure of the leaked fluid.

11. The method of claim 10 whereby the hydraulic system is a system as claimed in any of claims 1 to 9.
